**Europäisches Patentamt**

**European Patent Office**

**Office européen des brevets**

(11) Publication number : **0 507 720 A2**

# (12) EUROPEAN PATENT APPLICATION

(21) Application number : **92500025.9**

(22) Date of filing : **20.03.92**

(51) Int. Cl.[5] : **F16B 5/06, F16B 3/00**

(30) Priority : **01.04.91 ES 9100934 U**

(43) Date of publication of application :
**07.10.92 Bulletin 92/41**

(84) Designated Contracting States :
**AT BE CH DE DK ES FR GB GR IT LI LU NL PT SE**

(71) Applicant : **Costa Claver, Jorge**
**Provença, 474**
**E-08025 Barcelona (ES)**

(72) Inventor : **Costa Claver, Jorge**
**Provença, 474**
**E-08025 Barcelona (ES)**

(74) Representative : **Curell Sunol, Jorge et al**
**c/o Dr. Ing. M. Curell Sunol I.I. S.L. Passeig de Gràcia 65 bis**
**E-08008 Barcelona (ES)**

(54) **Automatic device for panel assembly.**

(57) The device is provided with a male member (1) and a female member (2) respectively fixedly attached to panels (3a,3b) ; the member (2) comprises a cavity (12) for insertion of an active element (4) of the member (1) and is provided with a stop member (15) for retaining the active element (4) in said first cavity (12) ; it further comprises a slide member (17) arranged transversely and slidably towards the cavity (12) ; between the front end of the cavity (12) and the retractable stop member (15) there is located a spring (16). The rear base of the slide member defines an oblique surface (23) and there is a screw (20) which, when forced against the oblique surface (23) causes the slide member (17) to slide towards the cavity (12) and the active element (4) to be held.

FIG. 3

EP 0 507 720 A2

The invention relates to an automatic device for assembling panels and having a male member which may be fixedly attached to a first panel and which has an active element; and a female member which may be fixedly attached to a second panel and having: a) a first cavity adapted to receive therein said active element; and b) a retractable stop member for centering and retaining said active element in said first cavity.

This device generalises and improves those known for application in the formation of athermanous walls, particularly for refrigeration chambers, and allows the application thereof to the assembly of boards of any material for the construction of furniture, walls, bulkheads, roofs and floors to form enclosures or coverings therefor, or others, without exclusion, like the said refrigeration chambers.

In the case of panels for athermanous walls, there is known Spanish utility model n° 250,369 in which each panel is fixedly attached to an element of at least one coupling device formed by two mating members, a male one provided with a a salient active member and a further female one having a recessed active element having a mouth, there being located on,two different coplanar panels the mating elements for forming one same device with the recessed active member of the female member being adapted to receive the salient active element of the male member when the panels are juxtaposed and wherein the female member is provided with an adjustable retractable resilient stop member adapted to allow and maintain the insertion and to caused the juxtaposed panels to move closer together.

Also known is Spanish utility model n° 8601724 which relates to an arrangement for assembling a set of athermanous panels in which each panel is fixedly attached to an element of at least one coupling device formed by two mating elements with respective male and female members, in which the active element of the male member is provided at least on one side wall thereof with a cavity facing the active element of the female member formed by a retractable resilient stop member, having a sloping facet on the side adjacent the free edge of the element, and a further two sloping facets on sides connecting to the former, said sloping facets forming, together with a further surface opposite to the first one, the contour of the cavity and converge towards the bottom thereof wherein said active element of the female member engages, thereby determining the self-centering of the panel heightwise and drawing it up closer to the immediately adjacent one.

In the above two prior documents,the male and female members are laid in and the stop member, located on the female member, is operated by rotating a threaded stem engaged with an intermediate spring urging the stop member, said stem being accessible from an inner surface of the corresponding panel normal to the male member.

In the above cases, the procedure for assembling the panels to form an enclosure affords no problems for juxtaposed coplanar panels forming the smooth walls of said enclosure, but when it is wanted to assemble corner panels, it requires one of such panels to adopt an elbow shape at one end for connecting to the other panel to provide space for accessibility on the manoeuver for attaching the assembly device from the inside of the enclosure, which would not be possible when operating from the outside of said enclosure.

The drawback represented by having to manufacture rightangled panels to obtain the elbow in question is obvious, whereby it is desirable to avoid this circumstance, by making the coupling device directly accessible, in any case, all of which is the main object of this invention.

Furthermore, this invention has a greater scope with regard to the possibilities of application, since it is also adaptable not only to athermanous panels formed by an expanded plastics body portion flanked by rigid sheets of aluminium, PVC or other suitable material, but also in the assembly of panels for furniture, wall coverings and the like.

The device of the invention has been devised in the light of the above considerations and is of the type stated above at the beginning and is characterized in that said female member comprises a slide member which: a) is arranged transversely relative to said first cavity; b) may slide axially between a first position towards said first cavity and a second position away therefrom; c) the front end thereof, close to said first cavity, faces said retractable stop member, with a spring inserted therebetween; and d) it is provided with a rear wall, removed from said first cavity, defining an oblique surface relative to the axis of the slide member; there being an operating screw arranged transversely to said slide member and having an end adapted to engage said oblique surface, such that the screwing in of said screw causes said slide member to slide towards said first cavity.

Hereafter there are described figures illustrating the device:

Figure 1 is a perspective view of the male member.

Figure 2 is a perspective view of the female member, the phantom line showing one possible line of insertion of the male member in the female member.

Figure 3 is a cross section view of the female member.

Figure 4 is a cross section view of the whole device, with the male and female members thereof coupled together and, with regard to the previous figure, the slide member having moved to its close up position to the first cavity.

Figure 5 shows the coupling of a male member and a female member, shown in section, according to an embodiment for the laying in of both members in athermanous panels.

This automatic device for assembling panels, like other known systems, is formed by a male member 1, which may be fixedly attached to a first panel 3a, and a female member 2, which may be fixedly attached in turn to a second panel 3b. Both panels 3a, 3b are to be attached together. Such panels may consist of simple boards forming a piece of furniture or other structure, or of athermanous walls for forming refrigeration enclosures.

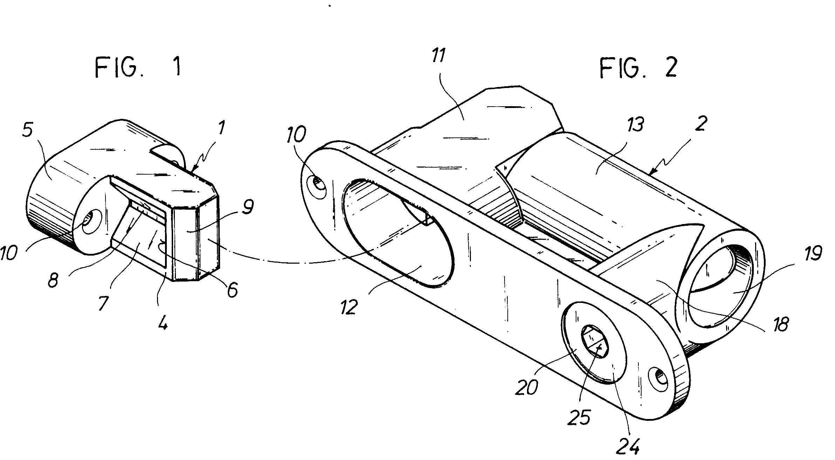

In Figure 1 the male member 1 is seen to comprise a salient active element 4 for insertion in a first cavity 12 of the female member 2. The female member is also provided with retaining means for the male member 1.

The male member 1 is formed by a support base 5, which may be laid in the panel 3a, and by the said active element 4. The latter is formed, on at least one surface thereof, with a recess defined by a front facet 6 and two side facets 7, with a central bottom portion 8, the edges being beveled, as at 9. There are also orifices 10 allowing for attachment to a panel 3b.

The female member 2 comprises a first body member 11 defining the first cavity 12 for receiving therein the active male element 4, a second body member 13 for a second transverse cavity 14 housing a retractable stop member 15, a spring 16 and a slide member 17, whereby said slide member is transversely arranged relative to the first cavity 12, and a third body member 18 having a third cavity 19 for an operating screw 20, all as shown in Figures 2, 3 and 4. The position of the third cavity involves the operating screw 20 being disposed, in turn, transversely relative to the slide member 17 and preferably parallel to the active element 4 of the male member 1, all of this naturally when the said members are in their respective cavities.

The retractable stop member 15 forms a frustoconical or rounded front end and a rear flange 21 limiting its forward movement on engaging an inner shoulder 22 of the body member 13. The spring 16 is located between the stop member 15 and the slide member 17, since the front end of the slide member 17 (i.e. the end close to the first cavity 12) faces the retractable stop member 15. The rear end of the slide member (obviously opposite to the said front end), defines a surface 23 which is oblique relative to the ideal axis of the slide member 17 itself, and which may be engaged by the rounded or frustoconical end 24 of a screw 20. The latter, for operation, is provided with a prismatic recess 25 for use of an Allen key or other means.

The said location of the spring 16 between the stop member 15 and the slide member 17 is effected preferably with at least one mortise, formed either in the stop member or in the slide member 17, although it is particularly preferred that there is a first mortise formed by a cylindrical recess in the retractable stop member 15 and a second mortise formed by an annular cylindrical projection or bushing 30, projecting outwardly from the front end of the slide member 17.

Two panels are coupled together by way of their male 1 and female 2 members by inserting the active element 4 of the male member 1 in the first cavity 12 of the female member 2, during which operation, the stop member 15, previously axially displaced by the bevel 9 of the active element 4, performs a first retaining function on engaging one flank of the element 4, since the active element makes contact with one of the facets 6, 7, causing some sliding until the stop member 15 becomes located against the bottom 8.

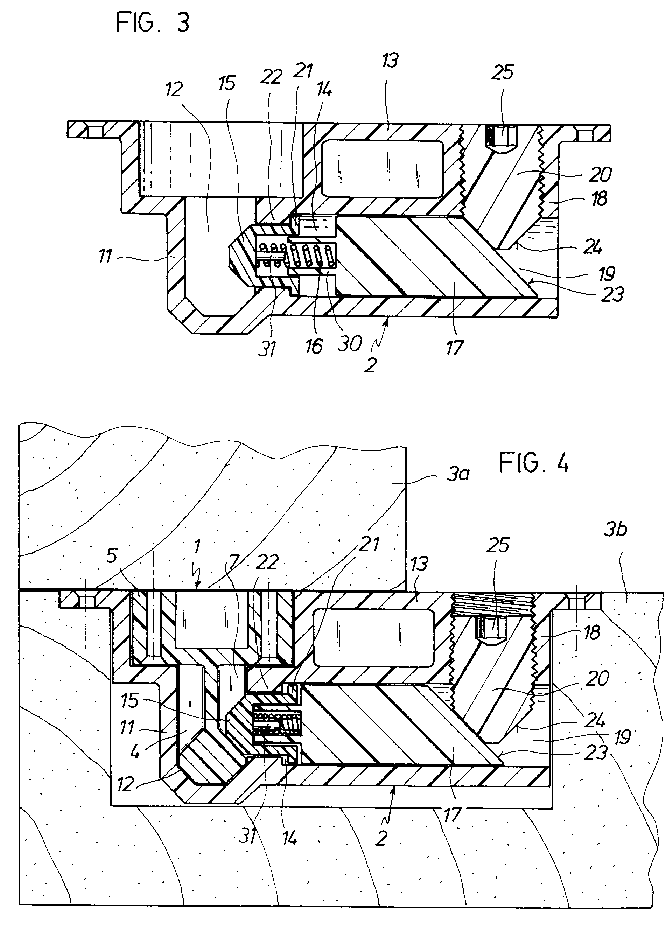

Thereafter the male member 1 is fixed, to which end, starting out from the position illustrated in Figure 4, the screw 20 is screwed in and on advancing it presses against the oblique surface 23 of the slide member 17 which, thereby, slides within the second cavity 14 of the body member 13. In this way, by way of the compressed spring 16, the retractable stop member 15 presses against the flank of the active element 4 of the male member 1 until it locks it in place.

When the screw 20 is unscrewed, the male member 1 is unlocked, without losing the whole of the retaining effect, as a result of the spring 16.

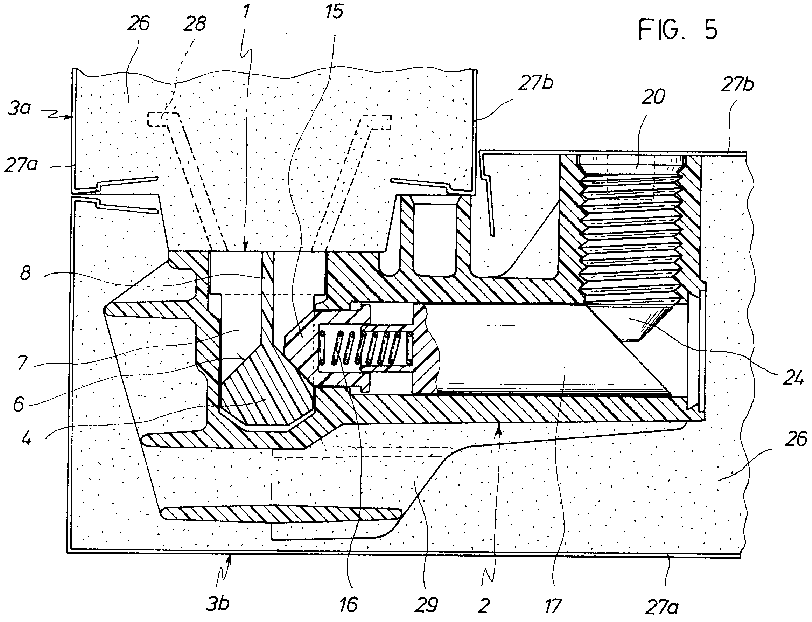

As indicated, two panels 3a, 3b may be mutually coupled together in a rightangle, as shown in Figure 4, in which a female member 2 is situated in a region of one surface of the panel 3b, close to an edge thereof, while the male member 1 is situated in an edge of the panel 3a. This procedure corresponds to panels forming boards of a piece of furniture, enclosure, fair stand or other structure, but the device is equally applicable to athermanous walls, as seen in Figure 5, of the type formed by an insulating block 26 comprised between two metal sheets 27a and 27b, in which circumstance the male 1 and female 2 members have auxiliary portions 28 and 29, respectively, for insertion in the body of the insulating material 26.

Reference has been made above to the location of the spring 16 between the stop member 15 and the slide member 17. In the embodiment illustrated, final locking of the movement of the slide member 17 is achieved by compressing the spring 16 housed partly in a bushing 30 which is an extension of the slide member itself, such that this bushing engages the bottom of the stop member 15. In a further embodiment, such as a hollow formed in the front end of the slide member 17, the engagement occurs between said front end of the slide member 17 and the rear flange 21 of said stop member 15. Figures 3 and 4 show a pin 31 extending from the stop member 15 to guide the spring 16.

This device, in comparison with others of similar purpose, provides better facilities for handling thereon, on providing always access for the operating screw from the inside of the piece of furniture, enclosure, etc, avoiding the need to make panels of angular shape, i.e. with an elbow for assembling with the following panel in a rightangled wall.

## Claims

1.- An automatic device for assembling panels and having a male member (1) which may be fixedly attached to a first panel (3a) and having an active element (4); and

a female member (2) which may be fixedly attached to a second panel (3) and having: a) a first cavity (12) adapted to receive therein said active element (4); and b) a retractable stop member (15) for centering and retaining said active element (4) in said first cavity (12),
characterized in that said female member (2) comprises a slide member (17) which: a) is arranged transversely relative to said first cavity (12); b) may slide axially between a first position towards said first cavity (12) and a second position away therefrom; c) the front end thereof, close to said first cavity (12), faces said retractable stop member (15), with a spring (16) inserted therebetween; and d) it is provided with a rear wall, removed from said first cavity (12), defining an oblique surface (23) relative to the axis of the slide member; there being an operating screw (20) arranged transversely to said slide member (17) and having an end adapted to engage said oblique surface (23), such that the screwing in of said screw (20) causes said slide member (17) to slide towards said first cavity (12).

2.- The device of claim 1, wherein an at least partial housing is formed for said spring (16) by way of at least one mortise forced in said retractable stop member (15) and/or in said front end of the slide member (17).

3.- The device of claim 2 having a first mortise formed by a cylindrical hollow of the retractable stop member (15) and a second mortise formed by an annular cylindrical projection (30) extending outwardly from said front end of the slide member and which may be inserted in said hollow.

4.- The device of any one of claims 1 to 3, wherein the male member (1) and the female member (2) are provided with means (28, 29) for being laid into the respective panel (3a, 3b).

5.- The device of any one of claims 1 to 4, wherein the male member (1) is located in an edge of a panel (3a) and the female member (2) is located in a region of one surface of a panel (3b) close to an edge thereof.

FIG. 2

FIG. 1

FIG. 3

FIG. 4

FIG. 5